# EUROPEAN PATENT SPECIFICATION

(11) **EP 2 200 730 B1**
(45) Date of publication and mention of the grant of the patent: **07.03.2012**
(21) Application number: 08803295.8
(22) Date of filing: 28.08.2008
(51) Int. Cl.: B01D 46/24, B01D 50/00, A47L 9/00, B01D 47/02, F24F 3/16

(54) **AIR FILTER DEVICE**
LUFTFILTERVORRICHTUNG
DISPOSITIF DE FILTRATION D'AIR

(30) Priority: 04.09.2007 IT UD20070154
(43) Date of publication of application: 30.06.2010
(73) Proprietor: De'Longhi SpA, 31100 Treviso (IT)
(72) Inventor: DE' LONGHI, Giuseppe, I-31100 Treviso (IT)
(74) Representative: Petraz, Davide Luigi
(86) International application number: PCT/EP2008/061269
(87) International publication number: WO 2009/030630

(56) References cited:
- WO-A-99/19045
- DE-A1-102005 037 778
- US-A- 2 233 167
- US-A- 5 954 863

## Description

### FIELD OF THE INVENTION

The present invention concerns a filter device to filter the air taken in by suction apparatuses, for example for domestic use. The filter device is able to effect a plurality of filterings so as to separate, progressively and in sequence, the dirt contained in the air taken in.

### BACKGROUND OF THE INVENTION

A filter device is known, to filter the dirty air taken in by a suction apparatus, which is suitable to effect three stages of filtering of the dirty air taken in. In a first filtering stage there is a liquid present which, following the cyclonic movement transmitted to it by the air taken in, when it reaches its surface, dampens and captures the particles of dirt present in the air taken in, in practice separating them from the latter. The separation of the liquid, and therefore of the dirt, from the mixture of air and water which has thus formed inside the device occurs centrifugally in the two subsequent filtering stages.

This three-stage filtering, however, is still not able to guarantee an adequate separation of the dirt from the air taken in, especially in the case when there are particles of dirt of extremely small size. Consequently, in the air that emerges from the filter device it is precisely those minute particles of dirt that remain, and that are the cause of many respiratory infections. Moreover, when the quantity of dirt in the air taken in is particularly high, the filtering action of this known device is insufficient precisely because of the filters used, with the result that the filtered air, returned to circulation in the surrounding environment, is still not completely clean.

The known device, moreover, needs inconvenient maintenance operations, such as for example those necessary to replace the liquid present in the first filtering stage, inside the device, which must be carried out substantially every time the apparatus is used.

WO99/19045 discloses a filtration device for air comprising an external and an internal container. The air enters tangentially into the external container, flows over liquid contained in this container and enters the inner container. The device comprises further separation stages, e.g. a dry filter comprising a HEPA-filter.

One purpose of the present invention is to achieve a filter device, to filter the dirty air taken in by a suction apparatus, which carries out an effective separation even of extremely small particles, or minute, from the air taken in and which can provide an adequate filtering action even in the presence of great quantities of dirt.

Another purpose of the present invention is to achieve a device that allows the user to perform rapid and easy maintenance operations.

The Applicant has devised and perfected the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a filter device according to the present invention, able to filter the air taken in by suction apparatuses, comprises a first container, able to contain a liquid, and a second container able to be disposed inside the first container, substantially coaxial and communicating with it.

The device also comprises first conveyor means associated with the first container, able both to convey the air taken in inside the latter, in a zone located substantially above the surface of the liquid, and also to make the air taken in circulate in a first direction of rotation.

The device is also provided with second conveyor means, associated with the second container, able both to convey the air taken in from the first container to the second container, and also to make it circulate in a second direction of rotation.

A pipe, associated with the second container, is able to allow the air taken in to exit downward from the second container.

According to a characteristic feature of the present invention, the second container comprises inside it at least a dry type filter unit provided with filter elements made of polyurethane material.

According to a variant of the present invention, the filter dry type unit comprises HEPA type filter elements.

According to another variant of the present invention, the first and the second direction of rotation of the air taken in, determined respectively by the first and second conveyor means, are concordant.

According to another variant of the present invention, said second direction of rotation is opposite said first direction of rotation in order to obtain a counterflow circulation of the two streams.

The filter dry type unit guarantees the device a stage of filtering that allows to effect an effective separation also of extremely small or minute particles of the air taken in. The dry-type filter unit also provides an adequate filtering action even in the presence of great quantities of dirt.

According to a variant of the present invention the first container comprises a lid able to be removably associated with the first container by means of attachment means of the snap-in type, for example, but not only, of the bayonet type.

The second container is coupled with the internal part of the lid and is also removable with respect to the first container.

The snap-in type attachment means allow a simple and quick removal from the first container of the lid and of the second container coupled therewith, allowing the user to replace the liquid in the first container with extreme ease every time the suction apparatus is used.

According to a variant of the present invention, the second container comprises, outside and around the second conveyor means, a protection element able to protect the dry filter from possible sprays of liquid arriving from the first container.

According to a variant of the present invention the dry type filter unit comprises a safety device able to command the suction apparatus on which the device is mounted to switch off, in the event of intake of liquids by the latter.

The dry type filter unit, being protected from sprays of liquid, does not need cleaning and drying operations every time the suction apparatus has been used. Consequently, it is only necessary to remove the lid from the second container when the filter unit has to be cleaned or removed, which happens after the apparatus has been used several times. All these features considerably reduce the operations of ordinary maintenance of the apparatus.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view of a device according to the present invention;
- fig. 2 is a lateral view of the device in fig. 1;
- fig. 3 is a section from III to III of fig. 2;
- fig. 4 is a section from IV to IV of fig. 3; and
- fig. 5 is a section from IV to IV of fig. 3 in an operating condition of the device in fig. 1.

### DETAILED DESCRIPTION OF A PREFERENTIAL FORM OF EMBODIMENT

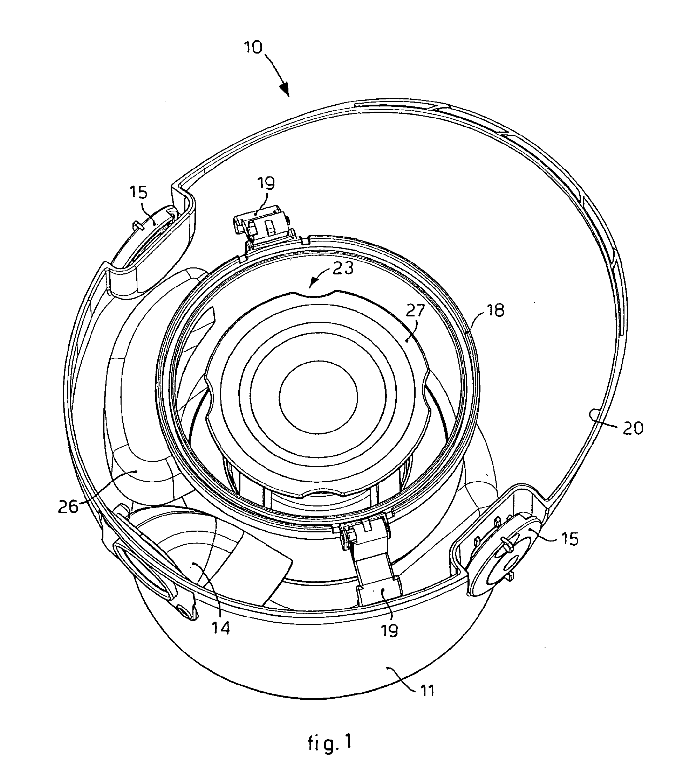

With reference to fig. 1, a filter device 10 according to the present invention is able to be used to filter the air taken in by a suction apparatus of a known type and not shown in the drawings.

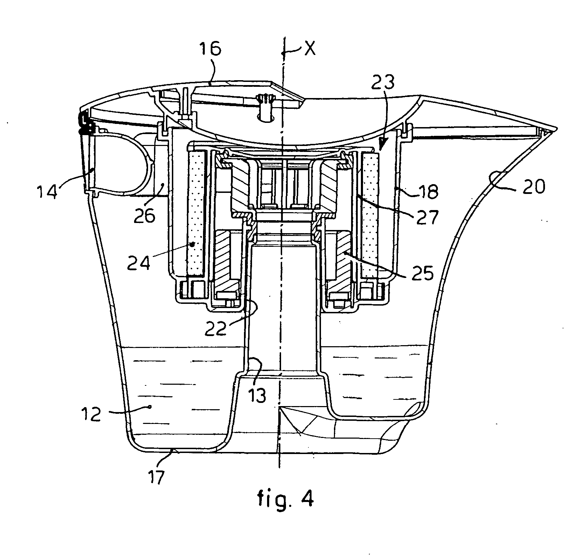

The filter device 10 comprises a first container, or external container 11, substantially cylindrical in shape, able to contain a liquid 12 (fig. 4). The first container 11 is provided with a pipe 13, cylindrical, disposed substantially coaxial with a central axis X and solid with its bottom 17.

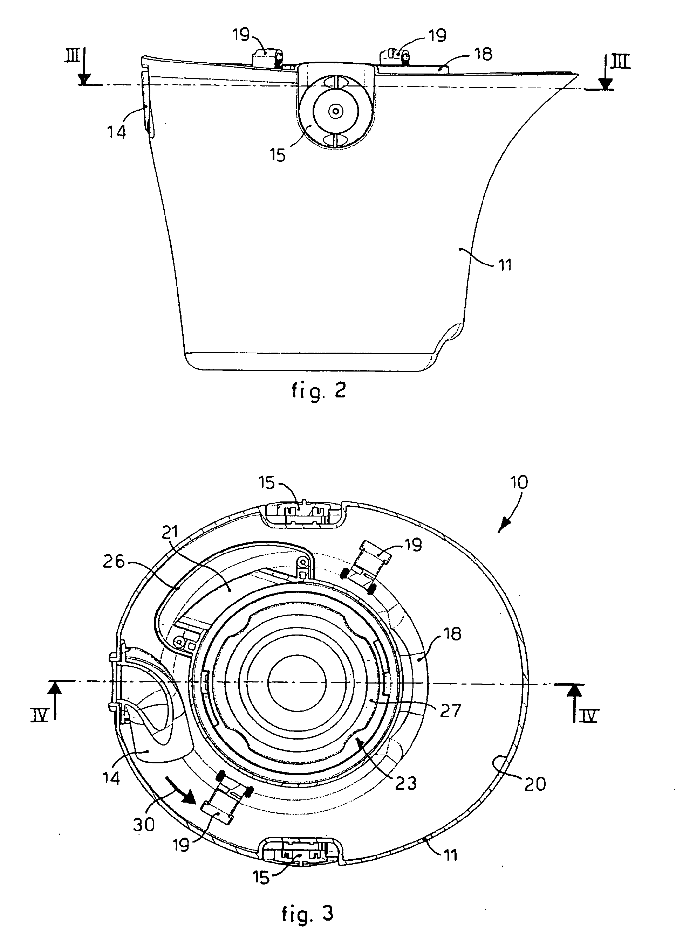

The first container 11 also comprises a lateral inlet 14, L-shaped and disposed in correspondence with its upper part, which is able to convey inside the first container 11 the air taken in by the suction apparatus. In particular, the lateral inlet 14, due to its L-shape, is also able to make the air taken in circulate in a vortex above the surface of the liquid 12 in an anti-clockwise direction, as shown by the arrow 30 in fig. 3.

The first container 11 is also provided, on its upper edge, with snap-in attachment elements 15, able to attach corresponding attachment elements of a lid 16.

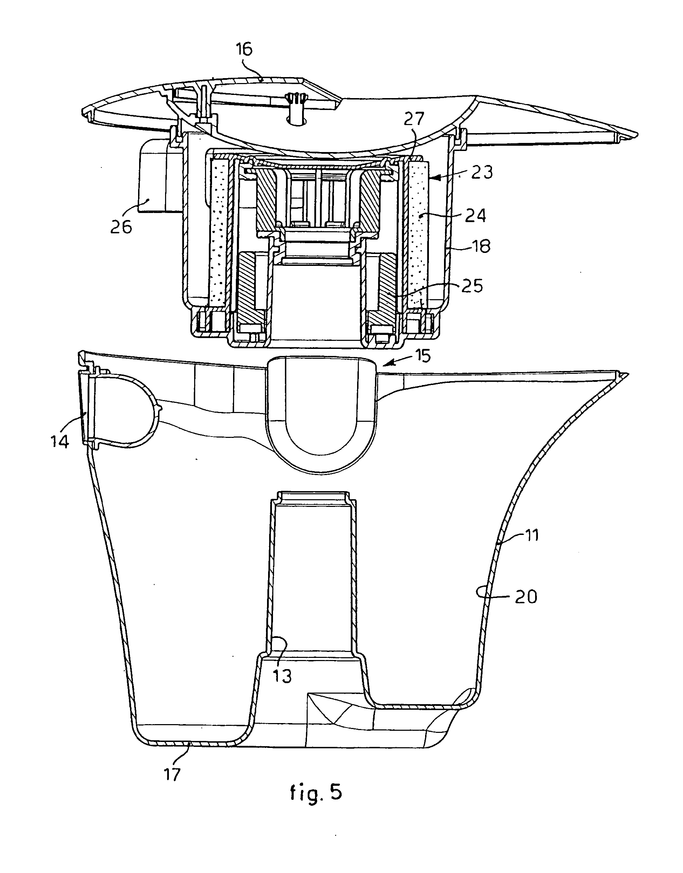

A second container 18 (fig. 4), or internal container, is able to be disposed inside the first container 11 (fig. 5), substantially coaxial with the central axis X, above the level of the liquid 12, to form with the first container 11 a circular chamber 20. In this case, the second container 18 is able to be attached to the internal part of the lid 16 by means of attachment elements 19, of a known type.

Moreover, the second container 18 comprises, in its upper part, a second inlet 21 able to convey the air taken in, present in the circular chamber 20, inside the second container 18.

Furthermore, the second container 18 is provided on the lower part with a cylindrical cavity 22 (fig. 5) in which the pipe 15 is able to be coupled, which thus functions as a support element for the container 18 itself. The pipe 13 is also able to make the air taken in exit downward from the second container 18.

A dry type filter unit 23 comprises filter elements 24, made of polyurethane material or HEPA type, and a support 27, able to support said filter elements 24. The filter unit 23 is able to be disposed substantially coaxial with the central axis X inside the second container 18 in order to filter extremely small particles from the air taken in.

In particular the dry type filter unit 23 is able to be coupled in the cylindrical cavity 22 of the second container 18 and consequently into the pipe 13.

Moreover, the second container 18 comprises externally a barrier 26, able to protect the dry type filter unit 23 from possible drops of liquid 12 arriving from the first container 11.

Moreover, the dry type filter unit 23 comprises inside it a float 25, able to command the suction apparatus to be switched off if the latter takes in liquids.

The device 10 as described heretofore functions as follows.

The air taken in by the suction apparatus is conveyed by the lateral inlet 14 inside the first container 11, forcing it to circulate in a vortex in the circular chamber 20 in an anti-clockwise direction above the surface of the liquid 12.

The air transfers its cyclonic motion to the liquid 12, which dampens the particles of dirt present in the air taken in, capturing them and consequently separating the particles from the air. In this way the air taken in is subjected to a first filtering.

The heavier dampened particles precipitate toward the bottom of the circular chamber 20, whereas the others remain in the air taken in, which subsequently reaches the second inlet 21. Due to the effect of the centrifugal force the heavier particles are thrust onto the external wall of the circular chamber 20, and do not enter inside the second container 18. In this way the air taken in is subjected to a second filtering.

The second inlet 21 conveys the air taken in inside the second container 18, forcing it to circulate along the internal wall of the latter. In this way there is a third filtering step due to the centrifugal force which thrusts the particles of dirt onto the internal wall of the second container 18, and from here they slide toward the bottom of the latter.

Finally, the air taken in reaches the dry type filter unit 23, where the filter element 24 subjects the air taken in to a further filtering, capturing the extremely small particles of dirt. The air taken in, now completely filtered, finally exits downward from the filter device 10 through the pipe 13.

It is clear that modifications and/or additions of parts may be made to the air filter device 10 as described heretofore, without departing from the field and scope of the present invention.

It is also clear that, although the present invention has been described with reference to a specific example, a person of skill in the art shall certainly be able to achieve many other equivalent forms of air filter device, having the characteristics as set forth in the claims and hence all coming within the field of protection defined thereby.

## Claims

1. Filter device to filter the air taken in by a suction apparatus, comprising a first, external, container (11), able to contain a liquid (12); a second, internal, container (18) able to be disposed inside said first container (11), above the level of the liquid (12), substantially coaxial and communicating with said first container (11); first conveyor means (14) disposed in correspondence with an upper part of said first container (11) and able both to convey said air taken in inside said first container (11), above the surface of said liquid (12), and also to make said air taken in circulate in a vortex having a first direction of rotation so that the air is subjected to a first filtering by said liquid (12); a circular chamber (20) formed between said first container (11) and said second container (18) inside which, due to the centrifugal force, the heavier particles are thrust onto the external wall and do not enter inside the second container (18), thus subjecting the air to a second filtering; second conveyor means (21) associated with said second container (18) and able both to convey said air taken in, present in said circular chamber (20) and free of the heavier particles, from said first container (11) to said second container (18), and also to make said air taken in circulate in a second direction of rotation, thus thrusting the particles of dirt onto the internal wall of the second container (18) due to the centrifugal force, and subjecting the air to a third filtering; a pipe (13) solid with a bottom (17) of said first container (11) and able to be coupled with a cylindrical cavity (22) of the second container (18) in order to mount the second container (18) on the first container (11), said pipe (13) being also able to convey toward the outside said air exiting from said second container (18), and wherein said second container (18) comprises inside it at least a dry type filter unit (23) provided with filter elements (24) made of polyurethane material through which the air passes after said three filtering steps and before being expelled to outside through said pipe (13).

2. Device as in claim 1, **characterized in that** said first direction of rotation in the first container (11) and said second direction of rotation in the second container (18) are concordant.

3. Device as in claim 1, **characterized in that** said second direction of rotation in the second container (18) is opposite said first direction of rotation in the first container (11).

4. Device as in any claim hereinbefore, **characterized in that** said dry type filter unit (23) comprises filter elements (24) of the HEPA type.

5. Device as in any claim hereinbefore, **characterized in that** it also comprises a lid (16) able to be removably associated with said first container (11) by means of snap-in attachment means (15).

6. Device as in claim **5**, **characterized in that** said second container (18) is coupled with the internal part of said lid (16).

7. Device as in any claim hereinbefore, **characterized in that** said second container (18) is removable from said first container (11).

8. Device as in any claim hereinbefore, **characterized in that** it also comprises a protection element (26) able to protect said dry type filter unit (23) from sprays of said liquid (12).

9. Device as in any claim hereinbefore, **characterized in that** said dry type filter unit (23) comprises a safety device (25) able to command said suction apparatus to be switched off in the event of suction of liquids by said suction apparatus.

10. Device as in any claim hereinbefore, **characterized in that** said second container (18) is substantially cylindrical in shape having an external part symmetrical with respect to a central axis (X) and **in that** said dry type filter unit (23) is substantially coaxial with said central axis (X).

## Patentansprüche

1. Filtereinrichtung zum Filtern der von einer Saugvorrichtung angesaugten Luft, aufweisend einen ersten, externen, Behälter (11), der in der Lage ist, eine Flüssigkeit (12) zu fassen; einen zweiten, internen, Behälter (18), der in der Lage ist, innerhalb des ersten Behälters (11) angeordnet zu sein, oberhalb der Ebene der Flüssigkeit (12), im Wesentlichen koaxial zu und mit dem ersten Behälter (11) in Verbindung stehend; erste Fördermittel (14) angeordnet korrespondierend zu einem Oberteil des ersten Behälters (11) und in der Lage, um sowohl die angesaugte Luft innerhalb des ersten Behälters (11) oberhalb der Oberfläche der Flüssigkeit (12) zu fördern, und auch, um die angesaugte Luft in einen Wirbel mit einer ersten Drehrichtung zirkulieren zu lassen, so dass die Luft durch die Flüssigkeit (12) einer ersten Filterung unterworfen ist; eine kreisförmige Kammer (20), geformt zwischen dem ersten Behälter (11) und dem zweiten Behälter (18) innerhalb welcher, aufgrund der Zentrifugalkraft, die schwereren Partikel zur externen Wand geschleudert werden und nicht in den zweiten Behälter (18) eintreten, auf diese Weise die Luft einer zweiten Filterung unterwerfend; zweite Fördermittel (21), welche mit dem zweiten Behälter (18) assoziiert und in der Lage sind, sowohl die angesaugte Luft, die in der zweiten kreisförmigen Kammer (20) vorhanden und frei von den schwereren Partikeln ist, vom ersten Behälter (11) zum zweiten Behälter (18) zu fördern, und auch, um die angesaugte Luft in eine zweite Drehrichtung zu bringen, auf diese Weise die Partikel aufgrund der Zentrifugalkraft auf die interne Wand des zweiten Behälters (18) schleudernd, und die Luft einer dritten Filterung unterwerfend; ein Rohr (13) solide mit einem Boden (17) des ersten Behälters (11) und in der Lage, um gekoppelt zu sein mit einem zylindrischen Hohlraum (42) des zweiten Behälters (18), um den zweiten Behälter (18) auf dem ersten Behälter (11) zu befestigen, wobei das Rohr (13) auch in der Lage ist, um aus dem zweiten Behälter (18) austretende Luft nach außen zu befördern, und wobei der zweite Behälter (18) innerhalb von sich selbst wenigstens eine Trockentyp-Filtereinheit (23) aufweist, die mit aus Polyurethan-Material gefertigten Filterelementen (44) ausgestattet ist, durch welche die Luft nach den drei Filterungsschritten läuft, und bevor sie durch das Rohr (13) nach außen ausgestoßen wird.

2. Einrichtung nach Anspruch 1, **dadurch gekennzeichnet, dass** die erste Drehrichtung im ersten Behälter (11) und die zweite Drehrichtung im zweiten Behälter (18) übereinstimmend sind.

3. Einrichtung nach Anspruch 1, **dadurch gekennzeichnet, dass** die zweite Drehrichtung im zweiten Behälter (18) entgegengesetzt zur ersten Drehrichtung im ersten Behälter (11) ist.

4. Einrichtung nach irgendeinem der vorhergehenden Ansprüche, **dadurch gekennzeichnet, dass** die Trockentyp-Filtereinheit (23) Filterelemente (24) von der HEPA Type aufweist.

5. Einrichtung nach irgendeinem der vorhergehenden Ansprüche, **dadurch gekennzeichnet, dass** sie auch einen Deckel (16) aufweist, der in der Lage ist, mit dem ersten Behälter (11) mittels Einschnapp-Befestigungsmitteln (15) entfernbar assoziiert zu sein.

6. Einrichtung nach Anspruch 5, **dadurch gekennzeichnet, dass** der zweite Behälter (18) mit dem internen Teil des Deckels (16) gekoppelt ist.

7. Einrichtung nach irgendeinem der vorhergehenden Ansprüche, **dadurch gekennzeichnet, dass** der zweite Behälter (18) vom ersten Behälter (11) entfernbar ist.

8. Einrichtung nach irgendeinem der vorhergehenden Ansprüche, **dadurch gekennzeichnet, dass** sie auch ein Schutzelement (26) aufweist, welches in der Lage ist, die Trockentyp-Filtereinheit (23) vor Spritzern der Flüssigkeit (12) zu schützen.

9. Einrichtung nach irgendeinem der vorhergehenden Ansprüche, **dadurch gekennzeichnet, dass** die Trockentyp-Filtereinheit (23) eine Sicherheitseinrichtung (25) aufweist, welche in der Lage ist, der Saugvorrichtung im Falle von Ansaugen von Flüssigkeiten durch die Saugvorrichtung zu befehlen, abgeschaltet zu werden.

10. Einrichtung nach irgendeinem der vorhergehenden Ansprüche, **dadurch gekennzeichnet, dass** der zweite Behälter (18) im Wesentlichen zylindrisch ist mit einem externen Teil, welcher bezüglich einer Mittelachse (X) symmetrisch ist, und dass die Trockentyp-Filtereinheit (23) im Wesentlichen koaxial zur Mittelachse (X) ist.

## Revendications

1. Dispositif filtrant pour filtrer l'air reçu par un dispositif d'aspiration, comportant un premier récipient (11), externe, pouvant contenir un liquide (12), un second récipient (18), interne, pouvant être disposé à l'intérieur dudit premier récipient (11), au-dessus du niveau du liquide (12), sensiblement coaxial audit premier récipient (11) et communiquant avec celui-ci, des premiers moyens de transport (14) disposés en correspondance avec une partie supérieure dudit premier récipient (11) et pouvant à la fois acheminer ledit air reçu à l'intérieur dudit premier récipient (11), au-dessus de la surface dudit liquide (12), et également faire circuler ledit air reçu dans un vortex ayant un premier sens de rotation de sorte que l'air est soumis à un premier filtrage par ledit liquide (12), une chambre circulaire (20) formée entre ledit premier récipient (11) et ledit second récipient (18) à l'intérieur de laquelle, en raison de la force centrifuge, les particules les plus lourdes sont poussées sur la paroi externe et ne pénètrent pas à l'intérieur du second récipient (18), en soumettant ainsi l'air à un deuxième filtrage, des seconds moyens de transport (21) associés audit second récipient (18) et pouvant à la fois acheminer ledit air reçu, présent dans ladite chambre circulaire (20) et exempt des particules les plus lourdes, dudit premier récipient (11) jusqu'audit second récipient (18), et également faire circuler ledit air reçu dans un second sens de rotation, en poussant ainsi les particules de poussière sur la paroi interne du second récipient (18) en raison de la force centrifuge, et en soumettant l'air à un troisième filtrage, un tuyau (13) plein avec un fond (17) dudit premier récipient (11) et pouvant être couplé avec une cavité cylindrique (22) du second récipient (18) afin de monter le second récipient (18) sur le premier récipient (11), ledit tuyau (13) pouvant également acheminé vers l'extérieur ledit air sortant dudit second récipient (18), et dans lequel ledit second récipient (18) comporte à l'intérieur de lui au moins une unité filtrante de type sec (23) munie d'éléments filtrants (24) en polyuréthane, à travers lesquels l'air passe après lesdites trois étapes de filtrage et avant d'être expulsé vers l'extérieur par ledit tuyau (13).

2. Dispositif selon la revendication 1, **caractérisé en ce que** ledit premier sens de rotation dans le premier récipient (11) et ledit second sens de rotation dans le second récipient (18) sont concordants.

3. Dispositif selon la revendication 1, **caractérisé en ce que** ledit second sens de rotation dans le second récipient (18) est opposé audit premier sens de rotation dans le premier récipient (11).

4. Dispositif selon l'une quelconque des revendications précédentes, **caractérisé en ce que** ladite unité filtrante de type sec (23) comporte des éléments filtrants (24) du type HEPA.

5. Dispositif selon l'une quelconque des revendications précédentes, **caractérisé en ce qu'**il comporte également un couvercle (16) pouvant être associé de manière amovible audit premier récipient (11) par des moyens d'attache encliquetables (15).

6. Dispositif selon la revendication 5, **caractérisé en ce que** ledit second récipient (18) est couplé avec la partie interne dudit couvercle (16).

7. Dispositif selon l'une quelconque des revendications précédentes, **caractérisé en ce que** ledit second récipient (18) peut être retiré dudit premier récipient (11).

8. Dispositif selon l'une quelconque des revendications précédentes, **caractérisé en ce qu'**il comporte également un élément de protection (26) pouvant protéger ladite unité filtrante de type sec (23) de jets dudit liquide (12).

9. Dispositif selon l'une quelconque des revendications précédentes, **caractérisé en ce que** ladite unité filtrante de type sec (23) comporte un dispositif de sécurité (25) pouvant commander ledit dispositif d'aspiration pour être arrêté dans l'éventualité d'une aspiration de liquides par ledit dispositif d'aspiration.

10. Dispositif selon l'une quelconque des revendications précédentes, **caractérisé en ce que** ledit second récipient (18) est de forme sensiblement cylindrique ayant une partie externe symétrique par rapport à un axe central (X) et **en ce que** ladite unité filtrante de type sec (23) est sensiblement coaxiale audit axe central (X).
